# EUROPÄISCHE PATENTSCHRIFT

(11) **EP 1 712 168 B1**
(45) Veröffentlichungstag und Bekanntmachung des Hinweises auf die Patenterteilung: **01.08.2012**
(21) Anmeldenummer: 06015181.8
(22) Anmeldetag: 06.10.2003
(51) Int. Cl.: A47J 37/04

(54) **Drehspieß**
Revolving spit
Tourne-broche

(30) Priorität: 04.10.2002 DE 10246305; 04.10.2002 DE 10246304
(43) Veröffentlichungstag der Anmeldung: 18.10.2006
(62) Teilanmeldung aus: 03770905.2
(73) Patentinhaber: Tan Mutfak Makina, Gida Sanayi Ve Ticaret Ltd. Sti., 09010 Aydin (TR)
(72) Erfinder: Ümit, Can, 38100 Braunschweig (DE); Ümit, Cengiz, 38100 Braunschweig (DE)
(74) Vertreter: Stornebel, Kai

(56) Entgegenhaltungen:
- DE-A- 3 104 636
- FR-A- 2 732 881
- US-A- 5 918 534
- US-B1- 6 354 194

## Beschreibung

Die Erfindung betrifft einen Drehspieß mit einem Zentralkörper zur Aufnahme von Lebensmitteln gemäß dem Oberbegriff des Anspruchs 1.

Solche Drehspieße sind insbesondere für die Zubereitung von Döner oder Gyros oder dergleichen geeignet. Zur Zubereitung von Speisen sind die Drehspieße mit einem Wärmestrahler oder Heizelement ausgestattet, der oder das von außen auf die Lebensmittel einwirkt und die Lebensmittel grillt.

Drehspieß-Grillgeräte sind allgemein bekannt und haben insbesondere im Schnellimbissbereich weite Verbreitung gefunden. Zum Zubereiten der Speisen werden einzelne Fleischstücke auf den im allgemeinen senkrecht angeordneten Zentralkörper gesteckt und durch Drehen des Spießes relativ zu dem Heizelement, insbesondere Wärmestrahler, werden die Lebensmittel bzw. das Fleisch gegrillt und anschließend mit einem Messer portionsweise von oben nach unten abgeschnitten. Hierdurch wird ein bisher noch nicht gegrillter Kernbereich der auf dem Zentralkörper aufgeschichteten Lebensmittel der Hitzeeinwirkung des Heizelementes oder Wärmestrahlers ausgesetzt, wodurch in kurzer Zeit eine weitere Schicht der Lebensmittel gegrillt und gegart wird. Eine solche Vorrichtung ist aus der DE 197 40 659 C2 bekannt.

Aus der DE 691 01 473 T 2 ist eine Vorrichtung zum Zubereiten von Fleisch bekannt, die ein äußeres und ein inneres Gehäuse sowie ein Gebläse aufweist, um Kühlluft zwischen den Raum zwischen dem inneren und dem äußeren Gehäuse umzuwälzen. Auf diese Art und Weise wird die Unterseite des Behandlungsraumes, in dem Fleisch zubereitet wird, stärker als die Oberseite gekühlt und auf die Unterseite verspritztes Fett schlägt sich nieder, anstatt daran zu kleben und eventuell zu verkohlen. Die Kaltluft kommt nicht mit den zuzubereitenden Lebensmitteln in Kontakt.

Je nach Art des zuzubereitenden Fleisches, der Heizleistung des Heizelementes oder der Temperatur der Lebensmittel auf dem Zentralkörper sowie der Art und Weise des Abschneidens der gegrillten Außenschicht kann es notwendig werden, das Heizelement oder die Heizelemente in der Stellung zu dem zu grillenden Lebensmittel zu verändern. Eine Möglichkeit dies zu erreichen sieht vor, dass der Zentralkörper in Bohrungen eingesetzt wird, die in einem abnehmenden Abstand zu dem Heizelement in einer Grundplatte angeordnet sind. Das obere Ende des Zentralkörpers wird ebenfalls in Ausnehmungen eines Haltebügels eingeführt oder eingelegt. Nachteilig hieran ist die mitunter schwere Handhabung des mit Lebensmitteln versehenen Zentralkörpers sowie die mangelnde Feineinstellbarkeit.

Die Fr- 2, 732, 881 A1 zeigt einen modularen Grill mit einem waagerecht angeordneten Drehspieß, der drehbar angetrieben und auswechselbar an nach unten offenen, U-förmigen Halterungen gelagert ist. Ebenfalls an einer U-förmigen, waagerecht liegenden Halterung ist eine Heizeinrichtung angeordnet, die an dem waagerecht liegenden, oberen Schenkel verschieblich angeordnet ist. Um verschiedene Mengen und Lebensmittel grillen zu können, kann das Gestell auseinander gezogen und mehrere Heizelemente nebeneinander angeordnet werden.

Aufgabe der vorliegenden Erfindung ist es, den Stand der Technik dahingehend zu verbessern, dass eine schnelle und einfache Anpassung der Position des Heizelementes zu dem Lebensmittel ermöglicht wird. Erfindungsgemäß wird diese Aufgabe durch einen Drehspieß mit den Merkmalen des Anspruchs 1 gelöst.

Vorteilhafte Weiterbildungen und Ausgestaltungen der Erfindung sind in den Unteransprüchen beschrieben.

Die Erfindung sieht einen senkrecht angeordneten Zentralkörper zur Aufnahme von Lebensmitteln vor, insbesondere geschichtetes Fleisch und geschichtete Fleischprodukte, die um den Zentralkörper angeordnet sind, wobei ein von außen auf die Lebensmittel einwirkendes Heizelement in der Nähe angeordnet ist. Das Heizelement ist dabei an seinem unteren Ende mit einer Vorrichtung versehen ist, mit der es verschwenkbar und verschieblich an einer U-förmig ausgebildeten Halterung einseitig mit seinem unteren Ende an dem oberen Schenkel der Halterung befestigt ist, wobei der obere Schenkel der Halterung unterhalb der Lebensmittel angeordnet ist, so dass die Lebensmittel vollständig der über das Heizelement erzeugten Wärme ausgesetzt sind. Zu Reinigungs- oder Transportzwecken ist das Heizelement von der Halterung abnehmbar ausgebildet. Durch die verschiebliche Befestigung an dem unteren Ende der Halterung und vorzugsweise durch eine gleichzeitige Verschwenkbarkeit wird eine optimale Positionierung des Heizelementes zu dem zu grillenden Lebensmittel, vorzugsweise Fleisch, ermöglicht.

Durch die einseitige Befestigung des Heizelementes an seinem unteren Ende an einer Halterung wird das Heizelement und nicht der Zentralkörper mit dem Lebensmittel bewegt, was eine wesentliche Vereinfachung in der Handhabung darstellt. Die verschiebliche Befestigung ermöglicht eine genaue Positionierung des Heizelementes und die einseitige Lagerung an dem unteren Ende ermöglicht weiterhin eine leichte Handhabbarkeit, da das untere Ende eines Heizelementes aufgrund der nach oben steigenden Wärme kühl bleibt.

Eine einfache und platzsparende Ausgestaltung der Halterung ist gegeben, wenn diese als ein U-förmiger Träger ausgebildet ist, wobei der Träger in unmittelbarer Nähe des Zentralkörpers montiert ist. Die Montage erfolgt vorzugsweise an der Aufnahme des Zentralkörpers bzw. des Drehspießes, so dass die Drehspießaufnahme und die Halterung als eine Baueinheit gefertigt und verkauft werden können. Das Heizelement muss dann lediglich auf einem Schenkel des Trägers aufgeschoben und zu dem anschließend aufzusetzenden Zentralkörper mit Lebensmitteln ausgerichtet werden. Ebenfalls ist es möglich, die Halterung zusammen mit der Zentralkörperaufnahme und dem Heizelement komplett zu montieren und das Heizelement in einem abgeklappten Zustand, in dem es sich im Wesentlichen parallel zu den Schenkeln des U-förmigen Trägers befindet, zu versenden.

Eine verschiebliche und verschwenkbare Befestigung erfolgt vorzugsweise über ein arretierbares Gelenk, das an der Halterung festgeklemmt wird, so dass die Verschieblichkeit aufgehoben und gleichzeitig die Verschwenkbarkeit blockiert wird. Durch Lösen beispielsweise einer Schraube wird die Arretierung aufgehoben und das Heizelement kann entlang der Halterung verschoben und um das Gelenk verschwenkt werden.

Um eine gleichmäßige und umfassende Zubereitung des Fleisches zu ermöglichen, ist der Zentralkörper relativ zu dem Heizelement drehbar, wobei der Zentralkörper vorzugsweise motorisch angetrieben ist. Alternativ dazu ist der Zentralkörper lediglich drehbar gelagert und muss von Hand weitergedreht werden, wenn ein Bereich der Lebensmittel fertig gegrillt ist.

Nachfolgend werden anhand der beigefügten Figuren Ausführungsbeispiele der Erfindung näher erläutert werden. Gleiche Bezugszeichen in den Figuren bezeichnen gleiche Bauteile. Es zeigen:
- Figur 1 -: eine Querschnittsansicht eines Drehspießes mit Heizelement;
- Figur 2 -: einen Drehspieß mit einem parallel zu einem Zentralkörper angeordneten Kühlelement; sowie
- Figur 3 -: eine Seitenansicht einer Heizelementenhalterung.

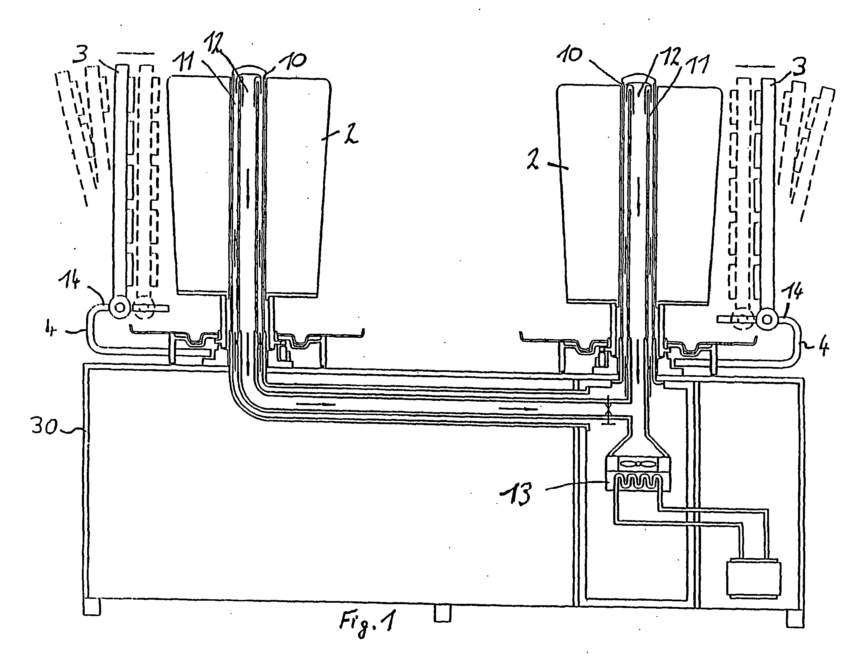

Figur 1 zeigt in Querschnittsansicht eine Zubereitungsstation für Döner oder Gyros mit zwei nebeneinander angeordneten Drehspießen, die aus einem drehbar gelagerten Zentralkörper 10 mit senkrecht dazu beabstandeten Scheiben zur Auflage von Lebensmitteln 2 versehen sind. Die Lebensmittel 2 sind übereinander aufgeschichtet und um den Zentralkörper 10 herum angeordnet. Seitlich zu dem Umfang der Lebensmittel beabstandet sind Heizstrahler 3 angeordnet, die in ihrer Entfernung und in ihrer Neigung zu dem Zentralkörper 10 veränderbar sind. Innerhalb des Zentralkörpers 10 sind Kanäle 11, 12 eingearbeitet, durch die ein beispielsweise durch eine Pumpe gefördertes Kühlmedium hindurchströmt, wie es durch die Pfeile angedeutet ist. Das gekühlte Medium, vorzugsweise gekühlte Luft, alternativ ein Kältemittel oder kaltes Wasser, wird durch die an der Außenwandung des Zentralkörpers 10 angeordneten Kanäle 11 hindurchgeführt und entzieht somit den um den Zentralkörper 10 herum angeordneten Lebensmitteln 2 die Wärme bzw. hält die Lebensmittel 2 gekühlt. Ein Rückstromkanal 12 ist zentral innerhalb des Zentralkörpers 10 ausgebildet und führt das erwärmte Medium zu einem Wärmetauscher 13, der in bekannter Art und Weise wie ein Kühlschrank funktioniert. Die entsprechenden Bauelemente für eine Kühlung des Mediums, wie Wärmetauscher, Drosselstelle, Kompressor und dergleichen sind allgemein bekannt und werden nicht näher beschrieben.

Die Figur 1 zeigt, dass mehrere Zentralkörper 10 nebeneinander angeordnet und an einer einzigen Kühlmittelversorgung angeschlossen sind, wobei das Kühlmittel aus einem Umluftstrom besteht, der an dem Wärmetauscher 13 gekühlt und anschließend durch die entsprechenden Kanäle den Zentralkörpern zugeleitet wird. Die Kühlluft kann entfeuchtet, gefiltert und entkeimt werden, um eine hygienisch unbedenkliche Kühlung zu ermöglichen.

Alternativ zu einer kontinuierlichen Kühlung und einer steten Zu- und Abfuhr von Kühlmittel ist es vorgesehen, dass der Zentralkörper 10 mit einem gekühlten Medium gefüllt ist, das eine entsprechende Kühlwirkung auf die Lebensmittel 2 in der Umgebung des Zentralkörpers 10 ausübt.

Ebenfalls kann das Kühlmittel in einer einkanaligen Spiralform oder durch Umströmung in einem zylindrischen Ringspalt geführt werden.

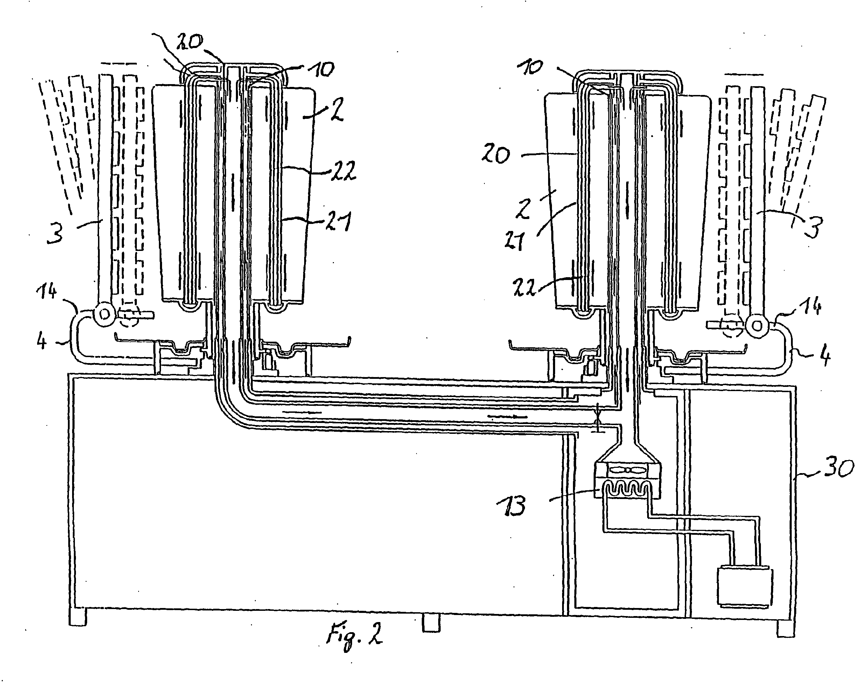

In der Figur 2 ist eine Weiterbildung der Erfindung gemäß Figur 1 dargestellt, bei der auf eine obere Öffnung des Zentralkörpers 10 ein Abdeckhaubenelement 20 aufgesetzt wird, das durch das Aufsetzen auf den Zentralkörper 10 mit dem Kühlmittelkreislauf verbunden ist. Das Abdeckhaubenelement 20 weist Zu- und Ableitungen 23, 24 auf, die mit entsprechenden Kanälen 11, 12 des Zentralkörpers 10 verbunden sind. Die Zu- und Ableitungen 23, 24 verbinden den Kühlmittelstrom mit parallel zu dem Zentralkörper 10 verlaufenden Kühlelementen 21, 22 auf, die von dem gekühlten Medium durchströmt werden. Die Kühlmittelzufuhr in die Stäbe oder Wände der Kühlelemente 21, 22 erfolgt durch einen Bypass in dem Zuführkanal 11 des Zentralkörpers 10 und führt das gekühlte Medium durch die Zuleitung 23 und das Kühlelement 21 hindurch. Das Kühlelement 22, das als Rückführkanal dient, mündet über die Ableitung 24 in den Rückführkanal 12 des Zentralelementes, so dass ein Kreislaufabzweig des gekühlten Mediums oder Kühlmittels durch einfaches Aufsetzen realisiert wird. Aus lebensmitteltechnischen Gründen erfolgt die Verwendung gekühlter Luft; Alternativen sind möglich.

Statt eingelassener Kühlelemente können Kühlkanäle unmittelbar in dem Lebensmittel 2 eingearbeitet sein, so dass die Zu- und Ableitungen 2, 24 unmittelbar die Kühlluft in den Lebensmittelkörper 2 einleiten.

Die Abdeckhaube 20 ist abnehmbar und kann gegen eine Abdeckung mit einem kleineren Durchmesser ausgetauscht werden, so dass eine Anpassung an den sich verändernden Durchmesser des Lebensmittels 2 erfolgen kann, wenn die äußeren Kühlkanäle angeschnitten sind und nach außen offen liegen.

Alternativ zu einem durchströmten Kühlelement 21, 22 kann eine Füllung des Kühlelementes 21, 22 mit einem gekühlten Medium vorgesehen sein, um die aufgeschichteten Lebensmittel länger zu kühlen.

Die Variante gemäß der Figur 2 hat den Vorteil, dass die mitunter große Masse an Lebensmitteln 2 effektiv gekühlt werden kann, ohne dass ein Verlust an der Handhabbarkeit und der Zubereitungsfähigkeit der Lebensmittel 2 mittels des Wärmestrahlers 3 auftritt. Nachdem die ersten Schichten des zubereiteten Lebensmittels von dem ursprünglichen Lebensmittelformkörper abgeschnitten wurden, kann die Abdeckhaube 20 abgenommen und das Kühlelement 21, 22 herausgezogen werden, so dass nur noch eine Kühlung des Zentralbereiches durch den Zentralkörper 10 erfolgt.

Neben einer Zufuhr gekühlter Luft von oben durch die Abdeckhaube 20 und die entsprechenden Zu- und Ableitungen 23, 24 ist es vorgesehen, dass gekühlte Luft seitlich aus Öffnungen in der Außenwandung des Zentralkörpers 10 in entsprechend angeordnete und mit den Öffnungen in Verbindung stehenden Kanälen innerhalb der aufgeschichteten Lebensmittel hineinströmt. Diese Öffnungen sind entweder manuell oder über eine elektronische Steuerung, die über Sensoren eine entsprechende Öffnung oder ein Verschließen über Verschlußeinrichtungen regelt, verschließbar. Die entsprechenden Öffnungen innerhalb der Außenwandung des Zentralkörpers 10 werden beispielsweise durch Schieber verschlossen.

In den Figuren 1 und 2 ist eine vollständige Zubereitungseinrichtung für Döner und Gyros auf einem Unterschrank 30 dargestellt, wobei ein Teil des Unterschrankes 30 als ein Kühlschrank zu nutzen wäre. Der Wärmetauscher 13 ist in einem abgeschlossenen Raum in dem Unterschrank 30 angeordnet, aus dem die gekühlte Luft in die jeweiligen Zentralkörper geleitet wird. Dieser Raum ist tiefgekühlt und über Wärmeleitungen sind die benachbarten Räume des Unterschrankes 30 ebenfalls kühler als die Umgebung und können beispielsweise als Kühltheke für die Aufbewahrung von Getränke oder Lebensmitteln wie Gemüse oder Salate verwendet werden. Der Motor für die Kühlung kann entweder ebenfalls in dem Unterschrank 30 angeordnet sein oder aber an einem entfernten Ort, beispielsweise in einem anderen Raum, angeordnet werden. Ebenfalls kann eine komplett externe Zuluftführung realisiert werden.

Um ein Vereisen der gesamten Anlage zu verhindern, ist es wichtig, dass der Kreislauf geschlossen bleibt, gegebenenfalls ist die rückgeführte Luft zu entfeuchten, um ein Vereisen der Anlage zu vermeiden.

Die Heizstrahler 3, die seitlich an dem Drehspieß angeordnet sind, sind sowohl in ihrer Neigung als auch in ihrer Entfernung zu dem Zentralkörper 10 verstellbar, wobei sie lediglich an ihrem unteren Ende verschwenkbar und verschieblich an einer entsprechenden Führung und Lagerung befestigt sind. Die Heizelemente 3 können leicht von der Führung abgenommen und aufgesteckt werden, ebenfalls können zu Transportzwecken die Heizelemente 3 abgenommen oder lediglich umgeklappt werden, so dass eine einfache und preisgünstige Verpackung möglich ist.

Die doppelwandigen Zentralkörper 10 werden einfach auf eine entsprechende Aufnahme aufgesetzt und stellen so die Verbindung zu dem Kühlmittelstrom her. Gegebenenfalls vorhandene Spalten in dem Kontaktbereich zwischen Zentralkörper 10 und einem Absaugventilator, der für eine entsprechende Rückströmung sorgt, schließen sich durch Vereisen in aller Regel selbsttätig. Dadurch ist es möglich, dass der Drehspieß wahlweise mit oder ohne Kühlung betrieben werden kann. Gegebenenfalls kann eine Kühlung auch nachgerüstet werden, also der Zentralkörper zunächst ohne Kühlaggregat betrieben und dann bei Bedarf mit einer Kühlung versehen werden.

Zur besseren Zugänglichkeit sind die Zentralkörper 10 drehbar, vorzugsweise motorisch angetrieben.

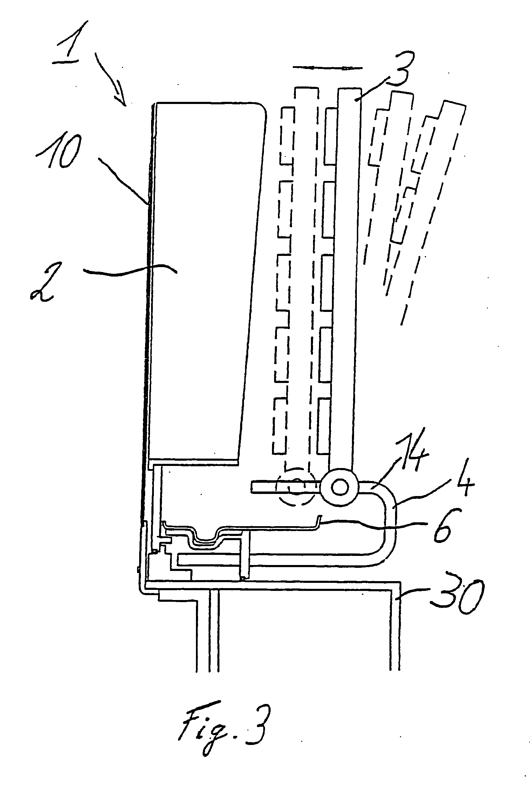

Die Figur 3 zeigt in Seitenansicht ein Drehspieß-Grillgerät 1 mit einem Zentralkörper 10, um den herum Lebensmittel 2, vorzugsweise Plattenfleisch oder eine Hackfleischmasse, aufgeschichtet ist. Der Zentralkörper 10 ist drehbar in einer Aufnahme gelagert, wobei der Zentralkörper 10 vorzugsweise motorisch angetrieben ist. Die Aufnahme ist auf einem Unterschrank 30 oder einer Kühltheke montiert, auf dem ebenfalls eine Halterung 4 angeordnet ist, die als ein liegendes U mit einem verlängerten Schenkel ausgebildet ist. Der unten liegende Schenkel der Halterung 4 ist an dem Unterschrank 30 montiert und kann alternativ an der Aufnahme des Drehspießes 10 angeordnet sein.

An dem oberen Schenkel 14 der Halterung 4 ist ein Heizelement 3 befestigt, wobei die Befestigung einseitig an dem unteren Ende des Heizelementes 3 erfolgt. Das Heizelement 3 ist entlang des oberen Schenkels 14 der Halterung 4 verschieblich und arretierbar befestigt, so dass der Abstand zwischen dem Heizelement 3 und dem Zentralkörper 10 und damit auch zu den zu grillenden Lebensmitteln 2 verändert werden kann. Ebenfalls ist das Heizelement 3 über ein Gelenk an dem unteren Ende verschwenkbar ausgebildet, wobei auch dieses Gelenk arretierbar ist, um eine einmal eingestellte Neigung des Heizelementes 3 beizubehalten.

Durch die verschiebliche und verschwenkbare Festlegung des Heizelementes 3 an der Halterung 4 kann neben einer optimalen Ausrichtung des Heizelementes 3 zu den zu grillenden Lebensmitteln 2 auch eine platzsparende und kompakte Bauweise realisiert werden, ohne dass der bislang übliche Rahmen oder Haltebügel, der oberhalb des Heizelementes und des Zentralkörpers ausgebildet war, um diese aufzunehmen, vorhanden sein muss. Zum Transport oder für Reinigungszwecke kann der Zentralkörper 1o einfach von der Aufnahme abgenommen und das Heizelement 3 waagerecht abgeklappt werden, so dass ein geringes Packvolumen vorliegt. Ebenfalls ist eine leichte Zugänglichkeit der Rückseite des Heizelementes 3 gegeben, wodurch dieses leichter zu reinigen ist.

Der Zentralkörper 10 wird einfach auf die Aufnahme aufgesteckt, wobei bereits die Lebensmittel 2 um den Zentralkörper 10 herum aufgeschichtet wurden. Das sich im wesentlichen parallel zur Längserstreckung des Zentralkörpers 10 erstreckende Heizelement 3 wird in Neigung und Entfernung zu den zu grillenden Lebensmitteln 2 ausgerichtet und eingeschaltet und der Zubereitungsprozess kann beginnen.

Die Ausbildung der Halterung 4 als ein U-förmiger Träger hat den Vorteil, dass einerseits durch den Verbindungsbereich der beiden waagerechten Schenkel eine Schutzwirkung für die Aufnahme des Zentralkörpers 10 ausgeübt wird; weiterhin kann in dem Raum zwischen den Schenkeln ein Auffangblech 6 angeordnet werden, das das von den Lebensmitteln 2 herabtropfende Fett auffängt.

Die Aufnahme für den Zentralkörper 10 und die Halterung 4 können als Baueinheit ausgebildet sein, die durch das Heizelement 3, das Auffangblech 6 und den aufzusteckenden Zentralkörper 10 komplettiert wird. Diese Anordnung kann dann auf dem Unterschrank 30 montiert werden, der gleichzeitig als Kühltheke für Getränke oder andere Lebensmittel dienen kann, wobei in der Aufnahme für den Zentralkörper 10 ein motorischer Antrieb integriert sein kann. Alternativ kann das Drehspieß-Grillgerät 1 komplett mit dem Unterschrank gefertigt, montiert und geliefert werden, wobei durch Umklappen des Heizelementes 3 nach dem Abnehmen des Zentralkörpers 10, die Bauhöhe und damit das Verpackungsvolumen reduziert wird. KS

## Patentansprüche

1. Drehspieß mit einem Zentralkörper (10) zur Aufnahme von Lebensmitteln (2), insbesondere geschichtetes Fleisch und geschichtete Fleischprodukte, die um den Zentralkörper (10) angeordnet sind und einem von außen auf die Lebensmittel (2) einwirkenden Heizelement (3), das an seinem unteren Ende mit einer Vorrichtung versehen ist, mit der es verschieblich an einer U-förmig ausgebildeten Halterung (4) einseitig mit seinem unteren Ende an dem oberen Schenkel (14) der Halterung (4) befestigt ist, wobei der obere Schenkel (14) der Halterung (4) unterhalb der Lebensmittel (2) angeordnet ist, **dadurch gekennzeichnet, dass** das Heizelement (3) verschwenkbar an der Halterung (4) befestigt ist und der Zentralkörper (10) senkrecht angeordnet ist.

2. Drehspieß nach Anspruch1, **dadurch gekennzeichnet, dass** der Zentralkörper (10) relativ zu dem Heizelement (3) drehbar ist.

3. Drehspieß nach Anspruch 1 oder 2, **dadurch gekennzeichnet, dass** der Zentralkörper (10) motorisch angetrieben ist.

4. Drehspieß nach einem der voranstehenden Ansprüche, **dadurch gekennzeichnet, dass** das Heizelement (3) von der Halterung (4) abnehmbar ist.

## Claims

1. A rotating spit with a central body (10) for supporting foodstuffs (2), in particular layered meat and layered meat products, arranged around the central body (10), and with a heating element (3) acting from outside on the foodstuffs (2), the heating element (3) is provided with a device at its lower end by which it is displaceable on a U-shaped holder (4) on one side, with its lower end on the upper branch (14) of the holder (4), the upper branch (14) of the holder (4) being arranged underneath of the foodstuffs (2), **characterized in that** the heating element (3) is pivotably secured on the holder (4) and the central body (10) is arranged vertically.

2. A rotating spit as claimed in claim 1, **characterized in that** the central body (10) is rotatable relative to the heating element (3).

3. The rotating spit as claimed in claim 1 or 2, **characterized in that** the central body (10) is driven by a motor.

4. The rotating spit as claimed in one of the preceding claims, **characterized in that** the heating element (3) is removable from the holder (4).

## Revendications

1. Tournebroche comprenant un corps central (10) pour recevoir des aliments (2), en particulier de la viande disposée par couches ou des produits à base de viande disposés par couches, qui sont agencés autour du corps central (10), et un élément chauffant (3) agissant de l'extérieur sur les aliments (2), cet élément chauffant étant équipé, à son extrémité Inférieure, avec un dispositif par lequel l'élément chauffant est fixé de façon déplaçable à un support en U (45), unilatéralement par son extrémité inférieure à la branche supérieure (14) du support (4), la branche supérieure (14) du support (4) étant disposée sous les aliments (2), **caractérisé en ce que** l'élément chauffant (3) est fixé de façon pivotante au support (4) et le corps central (10) est disposé verticalement.

2. Tournebroche selon la revendication 1, **caractérisé en ce que** le corps central (10) est rotatif par rapport à l'élément chauffant (3).

3. Tournebroche selon la revendication 1 ou 2, **caractérisé en ce que** le corps central (10) est entraîné par moteur.

4. Tournebroche selon l'une des revendications précédentes, **caractérisé en ce que** l'élément chauffant (3) peut être ôté du support (4).
